# FASCICULE DE BREVET EUROPEEN

(11) **EP 1 196 025 B1**
(45) Date de publication et mention de la délivrance du brevet: **09.04.2003**
(21) Numéro de dépôt: 00949679.5
(22) Date de dépôt: 07.07.2000
(51) Int. Cl.: A01K 11/00

(54) **DISPOSITIF DE TATOUAGE POUR ANIMAUX**
VORRICHTUNG ZUM TÄTOWIEREN VON TIEREN
DEVICE FOR TATTOOING ANIMALS

(30) Priorité: 07.07.1999 FR 9909042
(43) Date de publication de la demande: 17.04.2002
(73) Titulaire: CENTRE NATIONAL DU MACHINISME AGRICOLE, DU GENIE RURAL, DES EAUX ET DES FORETS (CEMAGREF), 92160 Antony (FR); Landata-Cobiporc, 35590 Saint-Gilles (FR)
(72) Inventeur: CHANET, Jean-Pierre, F-63540 Romaniat (FR); HUMBERT, Thierry, F-63115 Mezel (FR); LANDREVIE, Jean-Paul, F-73130 St-Martin la Chambre (FR)
(74) Mandataire: Branger, Jean-Yves
(86) Numéro de dépôt international: FR0001973
(87) Numéro de publication internationale: WO01003500

(56) Documents cités:
- DE-A- 1 607 112
- DE-C- 151 335
- GB-A- 2 234 420
- US-A- 1 699 012

## Description

La présente invention concerne un dispositif de tatouage pour animaux.

Il est particulièrement adapté, mais non exclusivement, au tatouage des porcelets.

La méthode la plus répandue pour procéder au tatouage des porcelets, en vue de leur identification, consiste à utiliser un instrument en forme générale de marteau, dont l'extrémité est pourvue d'un support de caractères de tatouage.

Ces derniers sont formés d'une juxtaposition d'aiguilles.

Pour réaliser un tatouage, on commence par encrer les aiguilles en les appliquant sur une éponge préalablement imprégnée d'encre.

On comprend que la qualité de tatouage va dépendre de la quantité, relativement aléatoire, d'encre au contact des aiguilles. Cet apport sera peu important si l'encre a commencé à sécher sur ou dans l'éponge.

De plus, la douleur subie par les animaux par la frappe elle-même, peut être, selon la pratique et l'habileté des opérateurs, plus importante et plus traumatisante que celle générée par la pénétration des aiguilles dans la peau.

Le tatouage se faisant « à la volée », la zone d'impact sur la peau des animaux n'est jamais rigoureusement la même.

On connaît par ailleurs un dispositif en forme de pistolet qui comporte un poinçon porte-caractères, également à aiguilles, liés à la tige d'un vérin. Lors de l'extension de cette tige, le poinçon subit le même mouvement, ce qui permet de réaliser le tatouage.

L'encrage des aiguilles se fait de la même manière que précédemment, c'est à dire par application préalable des aiguilles contre une éponge. On doit donc réaliser une double manipulation du «pistolet», ce qui favorise le séchage de l'encre.

De plus, du fait du mouvement rapide de la tige du vérin, l'encre a tendance à migrer vers la base des aiguilles, de sorte que les caractères marqués sont peu visibles à la surface de la peau de l'animal.

Le document DE-A-1 607 112 se rapporte à des perfectionnements à des appareils pour marquer les animaux. Cet appareil comporte une tête connectée à un bras oscillant et pourvue d'une série d'aiguilles.

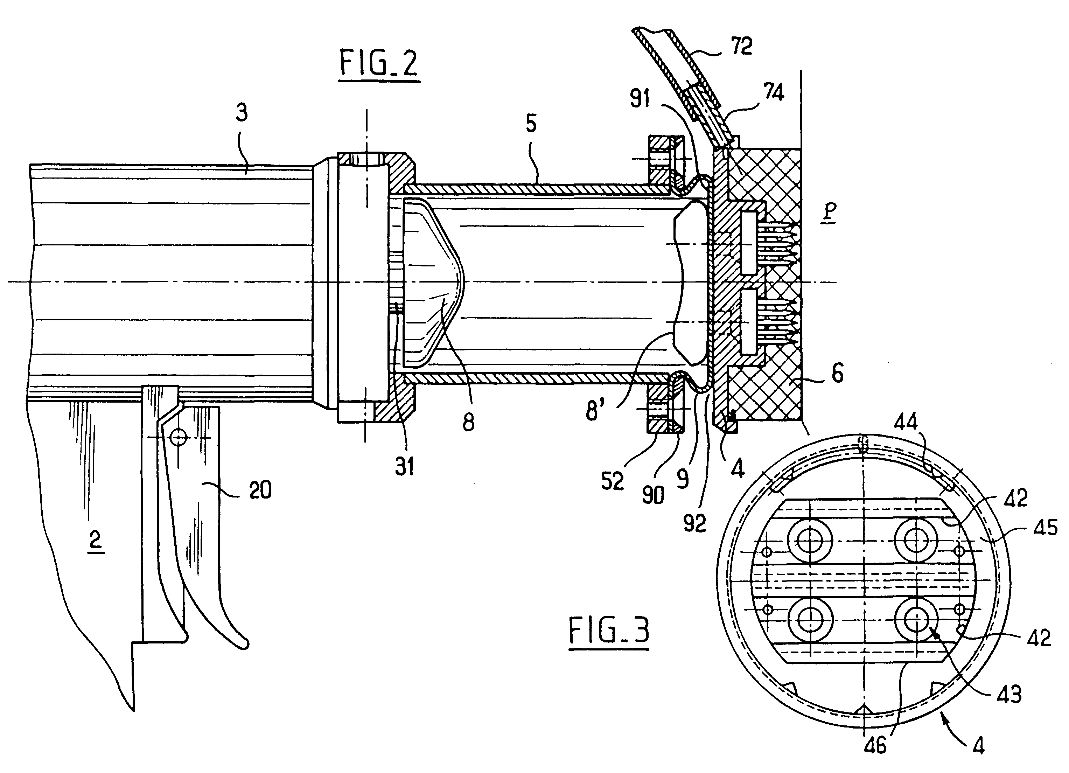

Dans la forme de réalisation des figures 2 et 3, une encre est amenée, via une tubulure, jusqu'à une pièce de distribution qui communique avec une masse poreuse.

Le bras est guidé dans un fourreau, de sorte que le mécanisme d'actionnement de la tête s'apparente à celui d'un vérin.

Ainsi que le montrent les figures précitées, en l'absence d'opération de tatouage, les aiguilles sont complètement logées à l'intérieur de la masse prévue compressible, tandis qu'elles en ressortent en vue du tatouage.

Le document GB-A-2 234 420 divulgue un dispositif de tatouage à tête vibrante, équipée d'une série d'aiguilles.

Il est précisé qu'une masse de matériau absorbant, rattachée à la tête, peut être alimentée en encre. Lorsque la tête est soumise à un mouvement vibratoire, les aiguilles traversent le matériau et se chargent en encre. Elles sont alors immédiatement ramenées à l'intérieur du matériau, puis à nouveau dirigées vers la peau de l'animal.

Les dispositifs décrits dans ces documents permettent de résoudre une partie des problèmes évoqués plus haut.

Toutefois, les organes en mouvement qu'ils comportent ne sont pas réellement séparés de l'élément qui portent les aiguilles. Il existe donc un risque élevé que de l'encre migre en direction de ces organes en mouvement, au risque d'en affecter le bon fonctionnement.

La présente invention vise donc à fournir un dispositif de tatouage qui, en plus d'apporter une solution aux problèmes évoqués, permette de réaliser des tatouages sans que l'encre ne migre en direction des pièces en mouvement.

Ce dispositif de tatouage permet de réaliser un marquage des animaux sans avoir à procéder à un encrage préalable des aiguilles.

Il permet de réaliser un tatouage de qualité constante, sans provoquer de traumatisme important pour les animaux.

Le dispositif objet de la présente invention comporte une platine porte-aiguilles mobile, dont les aiguilles sont destinées à être recouvertes d'encre et à s'appliquer, en fin de course de la platine, contre la peau d'un animal pour réaliser le tatouage, ainsi qu'un tampon spongieux imbibé d'encre disposé sur la trajectoire des aiguilles, apte à être traversé par celles-ci pour faire saillie contre la peau de l'animal au moment de l'impact.

Il se caractérise par le fait que ledit tampon est intégré à la platine, l'ensemble étant déplacé par un marteau logé dans un fût de guidage, et que ladite platine est solidaire de la face externe d'une membrane élastique qui obture une extrémité dudit fût.

Grâce à ce dispositif, les aiguilles vont être couvertes d'encre au moment de leur passage au travers du tampon. Il n'y a pas de risque de séchage de l'encre et celle-ci va se répartir uniformément sur toute la surface des aiguilles pendant leur traversée dans le corps du tampon. Par conséquent, on va pouvoir réaliser ainsi un marquage de qualité constante.

Par ailleurs, du fait que la platine est solidaire d'une membrane élastique qui obture une extrémité du fût, il y a une parfaite étanchéité entre cette platine et les organes en mouvement.

Selon d'autres caractéristiques avantageuses mais non limitatives de ce dispositif :
- la face interne de la membrane est solidaire d'une enclume apte à être frappée par ledit marteau ;
- le coulisseau, respectivement le marteau, sont solidaires de la tige d'un vérin ;
- ledit tampon est relié à des moyens d'alimentation en encre ;
- lesdits moyens consistent en un récipient de stockage relié audit tampon par une tubulure d'écoulement ;
- ledit récipient est disposé de telle manière que l'écoulement d'encre en direction du tampon se fasse par gravité ;
- ladite tubulure communique avec ledit tampon, ce dernier étant prévu compressible, de sorte qu'il s'imprègne d'encre à chaque fois qu'il reprend, à la suite d'un impact, sa forme initiale non comprimée.

D'autres caractéristiques et avantages de la présente invention apparaîtront à la lecture de la description qui va suivre de certains modes de réalisation particuliers. Cette description sera faite en référence aux dessins annexés dans lesquels :
- la figure 1 est une vue de face, avec arrachement partiel, d'un dispositif de tatouage dont le fonctionnement est conforme à l'état de la technique ;
- la figure 2 est une vue partielle de face, également avec arrachement partiel, d'un dispositif conforme à l'invention ;
- la figure 3 est une vue de face de la platine porte aiguilles du dispositif de la figure 2 ;
- la figure 4 est une vue analogue à la figure 2, destinée à illustrer la façon dont on utilise le dispositif, pour réaliser un tatouage.

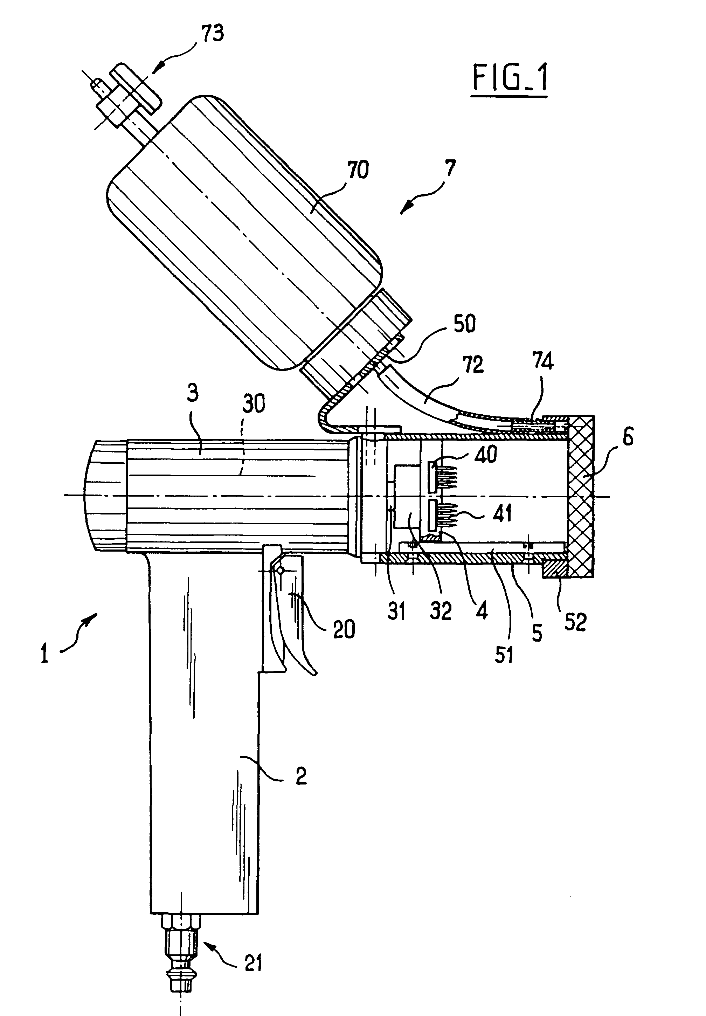

Le dispositif 1 de la figure 1, dont le fonctionnement est sensiblement similaire à ceux de l'état de la technique cité plus haut, a l'allure générale d'un pistolet.

Il comporte un manche de préhension ou crosse 2, en partie supérieure de laquelle est articulée une gâchette 20.

Perpendiculairement à cette crosse s'étend un corps cylindrique 3 qui est constitué par le corps d'un vérin 30 à double effet.

Ce vérin est de préférence à alimentation pneumatique et l'air y est amené via une tubulure non visible, logée dans l'espace intérieur creux de la crosse. Sur la figure 1 est représenté un embout 21 solidaire de cette tubulure, qui fait saillie hors de l'extrémité inférieure de la crosse et qui est apte à être raccordé à une source d'alimentation en air comprimé.

La tige 31 du vérin 30 s'étend à l'intérieur d'un fût cylindrique 5 qui se situe dans le prolongement du corps 3.

C'est une pression sur la gâchette 20 qui provoque l'extension de la tige du vérin.

A la tige 31 est fixée, par une pièce de raccordement, une platine porte aiguilles 4. La forme de cette platine est adaptée pour pouvoir coulisser à l'intérieur du fût. Il s'agit d'une pièce généralement cylindrique, dont le diamètre correspond, au jeu près, au diamètre interne du fût 5.

Une clavette 51 est fixée longitudinalement à l'intérieur du fût 5 et assure le guidage en translation de la platine 4 dans celui-ci. A cet effet, ladite platine présente une échancrure de réception de cette clavette.

Des supports 40 d'aiguilles 41 à profil en « T », sont reçus dans des rainures de forme complémentaire prévues dans le porte aiguilles 4.

Autour de l'extrémité libre du fût opposée au vérin, est fixée une pièce annulaire 52 qui sert de support à un tampon spongieux 6 tel qu'une éponge. Ce tampon a la forme d'un disque épais dont le diamètre correspond au diamètre extérieur de la pièce annulaire 52. Ainsi, le tampon 6 obture l'extrémité libre du fût.

La partie supérieure de ce fût 5 porte une pièce de montage recourbée 50 apte à servir de support pour des moyens d'alimentation 7 en encre.

Ces moyens comprennent un récipient de stockage d'encre 70 pourvu d'un robinet de réglage 73 de type connu. L'encre contenue dans le réservoir s'écoule par gravité au travers d'une tubulure 72, dont l'extrémité libre coopère avec un embout 74, lui-même emmanché dans une ouverture qui traverse de part en part la pièce annulaire 52. Ainsi, l'encre qui s'écoule par la tubulure 72 est absorbée par le tampon spongieux 6.

La structure du dispositif de l'invention, visible à la figure 2, est sensiblement similaire à celle décrite ci-dessus.

Cela signifie que le dispositif comprend une crosse 2, un corps de vérin 3, un fût 5 et des moyens d'alimentation en encre 7.

Toutefois, il s'en démarque sur les points suivants.

La tige du vérin 31 porte à son extrémité libre une pièce 8 formant marteau et qui présente une forme ogivale, ce qui signifie qu'elle est bombée dans sa partie centrale.

A la pièce annulaire 52 est fixée, par l'intermédiaire d'une rondelle 90 et de vis non représentées, une membrane élastique 91 qui obture l'extrémité libre du fût. Cette membrane est par exemple réalisée en caoutchouc.

Sur sa face interne 91, c'est à dire tournée vers l'intérieur du fût 5, est fixée une pièce formant enclume 8', tandis que sur sa face externe opposée est fixée une platine porte aiguilles 4.

L'enclume 8' est massive et sa face tournée vers le marteau 8 est réalisée en creux, selon une forme sensiblement complémentaire dudit marteau.

La platine porte aiguilles 4 a la forme d'un disque 45, avec une partie saillante 46.

Sur la figure 3 sont visibles des trous 43 pour le passage de vis destinées à traverser l'épaisseur de la membrane 9 et à s'engager dans l'enclume, pinçant ainsi la membrane. Ces trous sont ménagés dans le fond de rainures en « T » 42, formées dans la partie saillante 46, et aptes à recevoir des supports d'aiguilles non représentés.

Dans ce mode de réalisation, la platine 4 porte un tampon spongieux 6 qui y est fixé par une série d'ergots périphériques 44 de forme triangulaire.

Le raccord 74 qui équipe la tubulure d'écoulement de l'encre débouche directement au niveau du tampon 6.

Nous allons maintenant décrire la façon dont on réalise un tatouage à l'aide du dispositif selon l'invention.

Dans une première étape, on applique le tampon 6 contre la peau P de l'animal à tatouer, dans la zone où l'on souhaite réaliser le tatouage (voir figure 2).

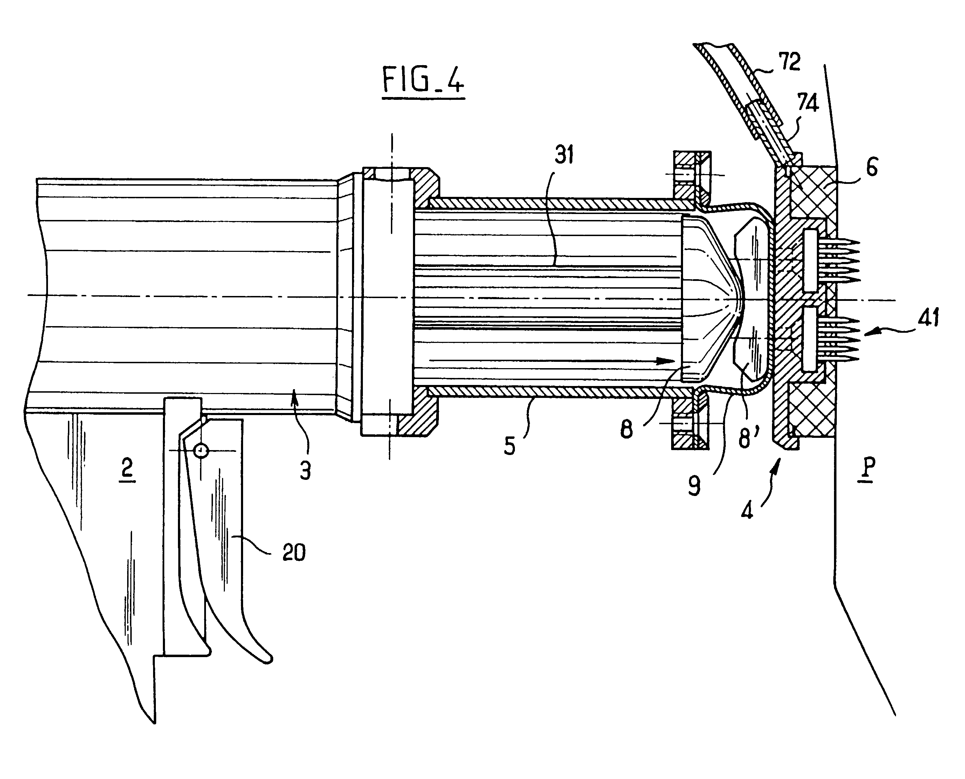

On appuie ensuite sur la gâchette 20, ce qui provoque l'extension de la tige 31 du vérin à l'intérieur du fût 5. Ceci provoque l'impact du marteau 8 contre la face antérieure de l'enclume 8', de sorte que la membrane 9 se déforme axialement (figure 4).

Ce faisant, les aiguilles 41 de la platine traversent le tampon 6 tout en comprimant celui-ci. Durant cette opération, c'est l'intégralité de la surface des aiguilles qui est revêtue d'encre, les extrémités pointues de celles-ci réalisant un marquage de bonne qualité.

Le relâchement de la gâchette 20 provoque le retrait progressif de la tige de vérin 31, de sorte que le tampon 6 reprend sa forme initiale expansée. Il s'opère donc une dépression à l'intérieur de ce tampon qui aspire l'encre contenue dans la tubulure 72. Ainsi, il reste continuellement imbibé.

Il y a donc un renouvellement régulier de l'encre dans le tampon, ce qui permet d'assurer des marquages répétés dans des conditions constantes de qualité.

En plus de permettre à la réalisation d'un tatouage de qualité constante, la structure du dispositif selon l'invention permet, grâce à la présence de la membrane 9, de séparer totalement les pièces en mouvement (tige 31 et marteau 8) de la platine 4. Il ne peut donc pas y avoir migration d'encre à l'intérieur du dispositif.

## Revendications

1. Dispositif de tatouage pour animaux, comportant une platine (4) porte-aiguilles mobile, dont les aiguilles (41) sont destinées à être recouvertes d'encre et à s'appliquer, en fin de course de la platine, contre la peau (P) d'un animal pour réaliser le tatouage, ainsi qu'un tampon spongieux (6) imbibé d'encre disposé sur la trajectoire des aiguilles (41), apte à être traversé par celles-ci pour faire saillie contre la peau (P) de l'animal au moment de l'impact, **caractérisé par le fait que** ledit tampon (6) est intégré à la platine (4), l'ensemble étant déplacé par un marteau (8) logé dans un fût de guidage (5), et que ladite platine (4) est solidaire de la face externe (92) d'une membrane élastique (9) qui obture une extrémité dudit fût (5).

2. Dispositif selon la revendication 1, **caractérisé par le fait que** la face interne (91) de la membrane (9) est solidaire d'une enclume (8') apte à être frappée par ledit marteau (8).

3. Dispositif selon l'une des revendications 1 ou 2, **caractérisé par le fait que** le coulisseau (4), respectivement le marteau (8), sont solidaires de la tige (31) d'un vérin (3).

4. Dispositif selon l'une des revendications 1 à 3, **caractérisé par le fait que** ledit tampon (6) est relié à des moyens (7) d'alimentation en encre.

5. Dispositif selon la revendication 4, **caractérisé par le fait que** lesdits moyens (7) consistent en un récipient de stockage (70) relié audit tampon (6) par une tubulure d'écoulement (72).

6. Dispositif selon la revendication 5, **caractérisé par le fait que** ledit récipient (70) est disposé de telle manière que l'écoulement d'encre en direction du tampon (6) se fasse par gravité.

7. Dispositif selon la revendication 6, **caractérisé par le fait que** ladite tubulure (72) communique avec ledit tampon (6), ce dernier étant prévu compressible, de sorte qu'il s'imprègne d'encre à chaque fois qu'il reprend, à la suite d'un impact, sa forme initiale non comprimée.

## Claims

1. A device for tattooing animals, the device comprising a moving needle-carrier plate (4) whose needles (41) are designed to be covered in ink and to press, at the end of the stroke of the plate, against the skin (P) of an animal in order to tattoo it, and a spongy pad (6) soaked in ink lying on the path of the needles (41) and suitable for being pierced by the needles so that they project against the skin (P) of the animal at the moment of impact, the device being **characterized by** the fact that said pad (6) is integrated with the plate (4), the assembly being moved by a hammer (8) housed in a guide barrel (5), and that said plate (4) is secured to the outside face (92) of a resilient diaphragm (9) which closes one end of said barrel (5).

2. A device according to claim 1, **characterized by** the fact that the inside face (91) of the diaphragm (9) is secured to an anvil (8') suitable for being struck by said hammer (8).

3. A device according to claim 1 or claim 2, **characterized by** the fact that the slider (4), respectively the hammer (8), are secured to the rod (31) of an actuator (3).

4. A device according to any one of claims 1 to 3, **characterized by** the fact that said pad (6) is connected to ink-feeder means (7).

5. A device according to claim 4, **characterized by** the fact that said feeder means (7) comprise a storage receptacle (70) connected to said pad (6) via a flow tube (72).

6. A device according to claim 5, **characterized by** the fact that said receptacle (70) is placed in such a manner that the flow of ink towards the pad (6) takes place under gravity.

7. A device according to claim 6, **characterized by** the fact that said tube (72) communicates with said pad (6), the pad being compressible so that it becomes impregnated with ink each time it expands to its initial non-compressed shape after being subjected to an impact.

## Patentansprüche

1. Vorrichtung zum Tätowieren von Tieren mit einer beweglichen Nadelträgerplatte (4), deren Nadeln (41) dafür bestimmt sind, mit Tinte bedeckt zu sein und sich am Laufende der Platte gegen die Haut (P) eines Tieres zu pressen, um die Tätowierung durchzuführen, sowie mit einem Schwammpuffer (6), der mit Tinte getränkt und auf der Bewegungsbahn der Nadeln (41) angeordnet ist, und der von diesen durchquert werden kann, um gegen die Haut (P) des Tieres zum Zeitpunkt des Auftreffens vorzuspringen, **dadurch gekennzeichnet, dass** der Puffer (6) in die Platte (4) integriert ist, wobei der gesamte Komplex durch einen Stempel (8) verschoben wird, der in einem Führungsschaft (5) angeordnet ist, und dass die Platte (4) einstückig mit der Außenfläche (92) einer elastischen Membran (9) ausgebildet ist, welche ein Ende des Schaftes (5) verschließt.

2. Vorrichtung gemäß Anspruch 1, **dadurch gekennzeichnet, dass** die Innenfläche (91) der Membran (9) einstückig mit einem Amboss (8') ausgebildet ist, der dafür geeignet ist, dass der Stempel (8) auf ihn aufschlägt.

3. Vorrichtung gemäß einem der Ansprüche 1 oder 2, **dadurch gekennzeichnet, dass** der Schieber (4) bzw. der Stempel (8) einstückig mit der Stange (31) eines Stellgliedes (3) ausgebildet sind.

4. Vorrichtung gemäß einem der Ansprüche 1 bis 3, **dadurch gekennzeichnet, dass** der Puffer (6) mit Vorrichtungen (7) zur Versorgung mit Tinte verbunden ist.

5. Vorrichtung gemäß Anspruch 4, **dadurch gekennzeichnet, dass** die Vorrichtungen (7) aus einem Lagerbehälter (70) bestehen, der mit dem Puffer (6) über einen Ablaufstutzen (72) verbunden ist.

6. Vorrichtung gemäß Anspruch 5, **dadurch gekennzeichnet, dass** der Behälter (70) derart angeordnet ist, dass das Abfließen der Tinte in Richtung des Puffers (6) durch Schwerkraft geschieht.

7. Vorrichtung gemäß Anspruch 6, **dadurch gekennzeichnet, dass** der Stutzen (72) mit dem Puffer (6) in Verbindung steht, wobei dieser letztere zusammendrückbar vorgesehen ist, so dass er sich jedes Mal mit Tinte voll saugt, wenn er nach einem Auftreffen seine nicht zusammengedrückte Anfangsform wieder annimmt.
